# EUROPÄISCHE PATENTSCHRIFT

(11) **EP 0 556 444 B1**
(45) Veröffentlichungstag und Bekanntmachung des Hinweises auf die Patenterteilung: **17.05.1995**
(21) Anmeldenummer: 92115868.9
(22) Anmeldetag: 17.09.1992
(51) Int. Cl.: F16F 13/00

(54) **Buchsenlager**
Brushing type support
Support en forme de manchon

(30) Priorität: 20.02.1992 DE 4205123
(43) Veröffentlichungstag der Anmeldung: 25.08.1993
(73) Patentinhaber: Firma Carl Freudenberg, 69469 Weinheim (DE)
(72) Erfinder: Rudolph, Axel, W-6140 Bensheim 3 (DE)

(56) Entgegenhaltungen:
- EP-A- 0 388 520
- FR-A- 2 555 688
- US-A- 3 698 703
- Patent Abstracts of Japan vol. 11, no. 344(M-640)(2791) 11.Nov. 1987 & JP-A-62 124 333 (TOKAI RUBBER) 5. Juni 1987
- Patent Abstracts of Japan vol. 12, no 478 (M-775)(3325) 14. Dez. 1988 & JP-A- 63 199 939 (MAGURO RUBBER) 18. August 1988
- Patent Abstracts of Japan vol. 13, no. 65(M-797) 14.Febr. 1989 & JP-A- 63 266 240 (MAZDA) 2. Nov. 1988
- Patent Abstracts of Japan vol. 6, no. 187(M-158)(1065) 25. Sept. 1982 & JP-A- 57 094 147(KINGUWA GOMU) 11. Juni 1982

## Beschreibung

Die Erfindung betrifft ein Buchsenlager, umfassend zwei einander umschließende, sich im wesentlichen parallel zu einer Achse erstreckende Tragteile, die durch einen Federkörper aus gummielastischem Werkstoff nachgiebig aufeinander abgestützt sind, wobei der Federkörper mindestens ein durch mindestens eine Dämpfungsöffnung verbundenes, flüssigkeitsgefülltes Kammerpaar aufweist, dessen Kammern quer zu der Achse einander gegenüberliegend angeordnet und in axialer Richtung beiderseits durch in einem Teilbereich elastisch verformbare Stirnwände begrenzt sind.

Ein solches Buchsenlager ist aus der EP-A-0 009 120 bekannt. Es umfaßt eine Vielzahl von flüssigkeitsgefüllten Kammerpaaren, deren Kammern auf einander gegenüberliegenden Seiten der Achse und in Richtung der Achse hintereinanderliegend angeordnet und durch voneinander unabhängige Dämpfungsöffnungen verbunden sind. Sowohl quer als auch parallel zur Achse eingeleitete Schwingungen lassen sich hierdurch in guter Weise dämpfen. Die Herstellung eines solchen Buchsenlagers ist jedoch mit großem Aufwand verbunden.

Der Erfindung liegt die Aufgabe zugrunde, ein solches Buchsenlager mit dem Ziel einer vereinfachten Herstellbarkeit weiterzuentwickeln.

Diese Aufgabe wird erfindungsgemäß bei einem Buchsenlager der eingangs genannten Art durch die Merkmale des kennzeichen den teils des Anspruchs 1 gelöst Unter Verwendung von nur einer einzigen Dämpfungsöffnung läßt sich hierdurch eine gute Schwingungsdämpfung erzielen sowohl bei Einleitung von Schwingungen, die parallel zur Achse, als auch bei solchen, die quer zur Achse eingeleitet werden.

Die bei Einleitung von achsparallelen Schwingungen erzielte Dämpfungswirkung beruht neben den vorstehend angesprochenen Merkmalen maßgeblich auf der relativen Ausdehnung der Versteifungszonen in radialer Richtung. Eine zunehmende Ausdehnung in radialer Richtung bedingt indessen zugleich eine Beeinträchtigung der radialen Relativbeweglichkeit der Tragteile. Unter diesem Gesichtspunkt hat es sich als vorteilhaft bewährt, wenn die Versteifungszonen der Stirnwände einer jeden Kammer einander in radialer Richtung überlappen. Hierunter ist zu verstehen, daß der verfügbare Raum in radialer Richtung zu 50 bis 75 % überdeckt sein soll.

Das Buchsenlager läßt sich besonders einfach erzeugen, wenn die Versteifungszonen durch großvolumige Bestandteile des Federkörpers gebildet sind. Sie können somit einen einstückigen Bestandteil des Federkörpers und der elastisch verformbaren Teilbereiche der Stirnwände bilden, bei dem der Grad der Verformbarkeit durch die großvolumige Dimensionierung lediglich so weit herabgesetzt ist, daß auf die in den Kammern während der bestimmungsgemäßen Verwendung enthaltene Flüssigkeit eine Kolbenwirkung ausgeübt werden kann.

Bei einer entsprechenden Dimensionierung der Versteifungszone bietet es sich an, die Dämpfungsöffnung im Inneren anzuordnen. Die Dämpfungsöffnung kann jedoch bedarfsweise auch an einer anderen Stelle des Buchsenlagers angebracht sein und beispielsweise einen Bestandteil der Tragteile bilden.

Nach einer vorteilhaften Ausgestaltung ist es vorgesehen, daß mindestens zwei Kammerpaare vorgesehen sind, deren Kammern einander in Umfangsrichtung übergreifen. Ergänzend zu der Dämpfungswirkung, die sich stets ergibt, wenn achsparallele Schwingungen eingeleitet werden, resultiert in diesem Fall die Möglichkeit, Schwingungen zu dämpfen, die in zwei senkrecht aufeinander stehenden, achsnormalen Richtungen eingeleitet werden.

Die Erfindung wird anhand der als Anlage beigefügten Zeichnung weiter verdeutlicht. Es zeigen:
- Figur 1: eine beispielhafte Ausführung des erfindungsgemäßen Buchsenlagers in längsgeschnittener Darstellung;
- Figur 2: das Buchsenlager gemäß Figur 1 in einer Ansicht von der Seite.

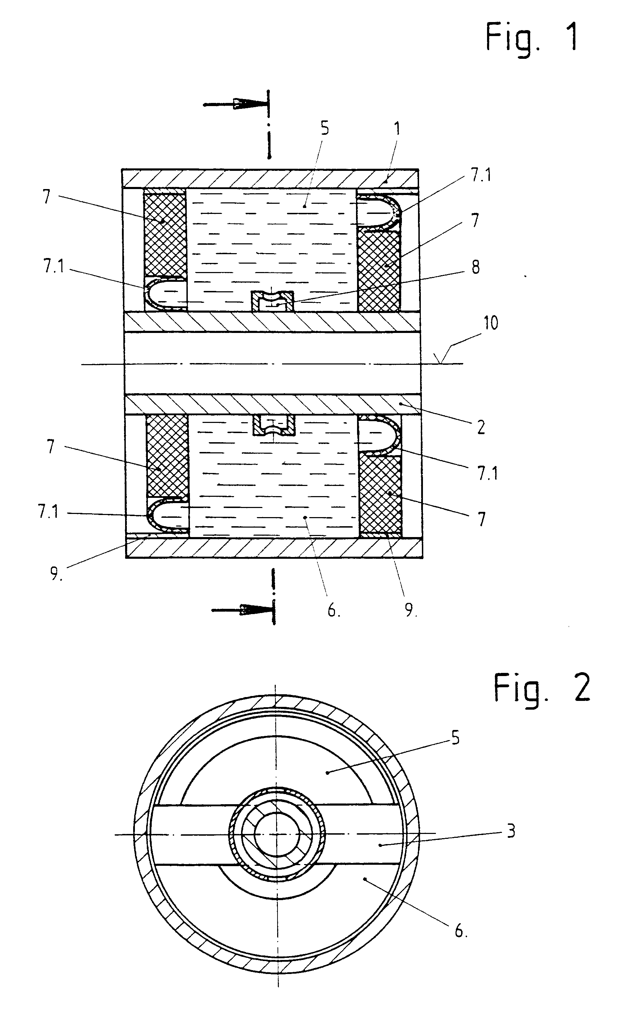

Das in Figur 1 gezeigte Buchsenlager umfaßt zwei einander umschließende, sich im wesentlichen parallel zu einer Achse 10 erstreckende Tragteile 1, 2, die durch einen Federkörper 3 aus gummielastischem Werkstoff nachgiebig aufeinander abgestützt sind, wobei der Federkörper 3 mindestens ein durch eine Dämpfungsöffnung 8 verbundenes, flüssigkeitsgefülltes Kammerpaar 5, 6 aufweist, dessen Kammern 5, 6 quer zu der Achse 10 einander gegenüberliegend angeordnet und in axialer Richtung beiderseits durch Stirnwände begrenzt sind, die in einem Teilbereich 7.1 elastisch verformbar sind. Die Stirnwände weisen neben dem verformbaren Teilbereich 7.1 eine im wesentlichen unverformbare Versteifungszone 7 auf, die im Bereich einer jeden Kammer 5, 6 einerseits durch das innere Tragteil 2 und andererseits durch das äußere Tragteil 1 begrenzt sind. Die im wesentlichen unverformbaren Versteifungszonen 7 sind dabei so angeordnet und den Kammern 5, 6 zugeordnet, daß einerseits die durch das innere Tragteil 2 und andererseits die durch das äußere Tragteil 1 begrenzten Versteifungszonen 7 die Kammern 5, 6 axial an entgegengesetzten Enden begrenzen. Die Stirnwände der Kammern 5, 6 bestehen bei dem gezeigten Ausführungsbeispiel aus Gummi. Sie bilden einen einstückigen Bestandteil des Federkörpers 3 und sind im Bereich ihres Außenumfanges durch unmittelbares Anvulkanisieren mit einem metallischen Fensterrohr 9 verbunden, welches der unverrückbaren und flüssigkeitsdichten Festlegung in dem aufnehmenden, äußeren Tragteil 1 dient. Letzteres kann rohrförmig gestaltet sein und besteht gewöhnlich, ebenso wie das innenliegende Tragteil 2, aus einem metallischen Werkstoff.

Die Kammern 5, 6 sind während der bestimmungsgemäßen Verwendung mit einer hydraulischen Flüssigkeit gefüllt, beispielsweise mit einem Gemisch aus Glykol und Wasser. Sie stehen durch die Dämpfungsöffnung 8 in einer gegenseitigen, hydraulischen Verbindung. Die Dämpfungsöffnung 8 ist von einem separaten, metallischen Ring umschlossen, der unverrückbar an dem inneren Tragteil 2 festgelegt ist. Sie ist so dimensioniert, daß sich bei der Hindurchpressung von Flüssigkeitsbestandteilen eine Dämpfungswirkung ergibt. Zur Funktion ist folgendes auszuführen:
Bei Einleitung von Schwingungen senkrecht zur Achse 10 in einer Ebene, die sich parallel zur Zeichnungsebene erstreckt, resultiert abwechselnd eine Volumenvergrößerung und -verkleinerung der flüssigkeitsgefüllten Kammern 5, 6 des Buchsenlagers mit der Folge, daß sich abwechselnd ein Druckanstieg bzw. eine Druckreduzierung in den Kammern 5, 6 ergibt. Hierdurch wird die Hindurchpressung von Flüssigkeitsbestandteilen durch die Dämpfungsöffnung 8 in die jeweilige Kammer niedrigeren Druckes bewirkt, was eine Dämpfung der erregenden Schwingung auslöst.

Eine abwechselnde Volumenvergrößerung und Volumenverkleinerung der flüssigkeitsgefüllten Kammern 5, 6 ergibt sich bei der gezeigten Ausführung jedoch auch dann, wenn parallel zur Achse 10 Schwingungen in das Buchsenlager eingeleitet werden. Auch in diesem Falle resultiert folglich eine Hindurchpressung von Flüssigkeitsbestandteilen aus der jeweiligen Kammer 5, 6 höheren Druckes in die jeweilige Kammer vergleichsweise niedrigeren Druckes. Die sich dabei ergebende Dämpfungswirkung ist der vorstehend beschriebenen entsprechend.

## Patentansprüche

1. Buchsenlager, umfassend zwei einander umschließende, sich im wesentlichen parallel zu einer Achse (10) erstreckende Tragteile (1,2), die durch einen Federkörper (3) aus gummielastischem Werkstoff nachgiebig aufeinander abgestützt sind, wobei der Federkörper (3) mindestens ein durch mindestens eine Dämpfungsöffnung (8) verbundenes, flüssigkeitsgefülltes Kammerpaar (5,6) aufweist, dessen Kammern (5,6) quer zu der Achse (10) einander gegenüberliegend angeordnet und in axialer Richtung beiderseits durch in einem Teilbereich (7.1) elastisch verformbare Stirnwände begrenzt sind, dadurch gekennzeichnet, daß alle Stirnwände radial außerhalb des Bereichs als Versteifungszonen (7) gestaltet sind, daß einerseits Versteifungszonen (7) vorgesehen sind, die durch das äußere Tragteil (1) begrenzt sind und andererseits Verstärkungszonen (7), die durch das innere Tragteil (2) begrenzt sind und daß einerseits die durch das innere (2) und andererseits die durch das äußere (1) Tragteil begrenzten Versteifungszonen (7) die Kammern an entgegengesetzten Enden begrenzen.

2. Buchsenlager nach Anspruch 1, dadurch gekennzeichnet, daß die Versteifungszonen (7) der Stirnwände einer jeden Kammer einander in radialer Richtung überlappen.

3. Buchsenlager nach Anspruch 1 bis 2, dadurch gekennzeichnet, daß die Versteifungszonen (7) durch großvolumige Bestandteile des Federkörpers (3) gebildet sind.

4. Buchsenlager nach Anspruch 1 bis 3, dadurch gekennzeichnet, daß die Versteifungszonen (7) die Dämpfungsöffnung (8) umschließen.

5. Buchsenlager nach Anspruch 1 bis 4, dadurch gekennzeichnet, daß mindestens zwei Kammerpaare (5, 6) vorgesehen sind, deren Kammern (5, 6) einander in Umfangsrichtung übergreifen.

## Claims

1. A bushing-type support, comprising two bearing parts (12) which surround one another, extend substantially parallel to an axis (10) and are supported resiliently on one another by a spring body (3) of rubber-elastic material, the spring body (3) having at least one pair (5, 6) of liquid-filled chambers connected by at least one damping opening (8), the chambers (5, 6) of which are arranged opposite one another transversely to the axis (10) and are bounded in the axial direction on both sides by end walls which are elastically deformable in a partial region (7.1), characterized in that all the end walls radially outside the region are designed as reinforcing zones (7), in that there are provided on the one hand reinforcing zones (7) which are bounded by the outer bearing part (1) and on the other hand reinforcing zones (7) which are bounded by the inner bearing part (2), and in that on the one hand the reinforcing zones (7) bounded by the inner (2) bearing part and on the other hand the reinforcing zones (7) bounded by the outer (1) bearing part bound the chambers at opposite ends.

2. A bushing-type support according to claim 1, characterized in that the reinforcing zones (7) of the end walls of each chamber overlap one another in the radial direction.

3. A bushing-type support according to either of claims 1 and 2, characterized in that the reinforcing zones (7) are formed by large-volume constituents of the spring body (3).

4. A bushing-type support according to any of claims 1 to 3, characterized in that the reinforcing zones (7) surround the damping opening (8).

5. A bushing-type support according to any of claims 1 to 4, characterized in that at least two pairs (5, 6) of chambers are provided, the chambers (5, 6) of which engage over one another in the circumferential direction.

## Revendications

1. Support en forme de manchon comprenant deux éléments porteurs (1, 2) s'entourant mutuellement et s'étendant essentiellement parallèlement à un axe (10), qui s'appuient l'un sur l'autre de manière déformable à l'intervention d'un corps élastique (3) constitué par un matériau manifestant une élasticité analogue à celle du caoutchouc, dans lequel le corps élastique (3) présente au moins une paire de chambres (5, 6) remplies de liquide, reliées par au moins une ouverture d'atténuation (8), les chambres (5, 6) étant disposées en opposition mutuelle transversalement à l'axe (10) et étant délimitées en direction axiale de part et d'autre par des parois frontales élastiquement déformables dans un domaine partiel (7.1), caractérisé en ce que toutes les parois frontales sont réalisées radialement à l'extérieur du domaine en zones de renforcement (7), en ce que, d'une part, on prévoit des zones de renforcement (7) qui sont délimitées par l'élément porteur externe 1 et, d'autre part, des zones de renforcement (7) qui sont délimitées par l'élément porteur interne (2), et en ce que, d'une part, la zone de renforcement (7) délimitée par l'élément porteur interne (2) et, d'autre part, la zone de renforcement (7) délimitée par l'élément porteur externe (1) délimitent les chambres à leurs extrémités opposées.

2. Support en forme de manchon selon la revendication 1, caractérisé en ce que les zones de renforcement (7) des parois frontales de chacune des chambres se chevauchent mutuellement en direction radiale.

3. Support en forme de manchon selon les revendications 1 à 2, caractérisé en ce que les zones de renforcement (7) sont formées par des composants du corps élastique (3) à grand volume.

4. Support en forme de manchon selon les revendications 1 à 3, caractérisé en ce que les zones de renforcement (7) entourent l'ouverture d'atténuation (8).

5. Support en forme de manchon selon les revendications 1 à 4, caractérisé en ce qu'on prévoit au moins deux paires de chambres (5, 6) dont les chambres se chevauchent mutuellement dans le sens périphérique.
